# EUROPEAN PATENT SPECIFICATION

(11) **EP 3 891 594 B1**
(45) Date of publication and mention of the grant of the patent: **15.05.2024**
(21) Application number: 19927604.9
(22) Date of filing: 05.05.2019
(51) Int. Cl.: G06F 3/06, G06F 13/16, G06F 13/10

(54) **MEMORY CONTROL SYSTEM WITH A SEQUENCE PROCESSING UNIT**
SPEICHERSTEUERUNGSSYSTEM MIT EINER SEQUENZVERARBEITUNGSEINHEIT
SYSTÈME DE COMMANDE DE MÉMOIRE AVEC UNE UNITÉ DE TRAITEMENT DE SÉQUENCE

(43) Date of publication of application: 13.10.2021
(73) Proprietor: Yangtze Memory Technologies Co., Ltd., Wuhan, Hubei 430074 (CN)
(72) Inventor: ZHANG, Huang Peng, Wuhan, Hubei 430074 (CN); FU, Xiang, Wuhan, Hubei 430074 (CN); WANG, Qi, Wuhan, Hubei 430074 (CN); DU, Zhi Chao, Wuhan, Hubei 430074 (CN); CAO, Hua Min, Wuhan, Hubei 430074 (CN); HUANG, Xin Yun, Wuhan, Hubei 430074 (CN); DONG, Wen Wen, Wuhan, Hubei 430074 (CN); XU, Shu Bing, Wuhan, Hubei 430074 (CN)
(74) Representative: Gramm, Lins & Partner Patent- und Rechtsanwälte PartGmbB
(86) International application number: PCT/CN2019/085504
(87) International publication number: WO 2020/223849

(56) References cited:
- WO-A1-2007/135144
- WO-A1-2008/084681
- CN-A- 106 155 586
- CN-A- 109 271 108
- US-A- 5 918 242
- US-A1- 2006 161 727
- US-A1- 2015 149 694
- US-A1- 2016 179 388
- US-B2- 9 262 084

## Description

### Background of the Invention

### Field of the Invention

The present invention is related to a memory control system, and more particularly, to a memory control system with a sequence processing unit.

### Description of the Prior Art

Since the memory operations, such as program operations and read operations, usually involve complicate signal control and address decoding, the memories are usually accessed through internal memory control architectures. The traditional memory control architecture is usually based on microcontrollers to handle complicate controls, such as the control of the charge pump, the power regulator, the address decoder, and the sense amplifier.

However, due to the regular processing procedures, for example, the cycle of fetching, decoding and executing, required by microcontroller, the resource utilization ratio and the performance of the microcontroller are rather low. Furthermore, since the development of memory control is based on operation instructions that are not intuitively readable, it is difficult to maintain or update.

US 9 262 084 B2 discloses a memory device for read and write operations. A micro sequencer executes start instructions, whereby the micro sequencer can executes partial protocols on individual memory devices.

US 5 918 242 A discloses a general-purpose customizable memory controller.

US 2015 / 0 149 694 A1 discloses an adaptive context disbursement for improved performance in non-volatile memory systems.

US 2016 / 0 179 388 A1 discloses a method and apparatus for providing programmable nvm interface using sequencers.

### Summary of the Invention

One embodiment of the present invention discloses a memory control system according to claim 1.

Another embodiment of the present invention discloses a method for operating a memory control system according to claim 6.
These and other objectives of the present invention will no doubt become obvious to those of ordinary skill in the art after reading the following detailed description of the preferred embodiment that is illustrated in the various figures and drawings.

### Brief Description of the Drawings

FIG. 1 shows a memory control system according to one embodiment of the present invention.
FIG. 2 shows the timing diagram of the communication between the micro controller and the sequence processing unit.
FIG. 3 shows the task instruction set stored in the internal storage unit according to one scheduling algorithm.
FIG. 4 shows the task instruction set stored in the internal storage unit according to another scheduling algorithm.
FIG. 5 shows a method for operating the memory control system in

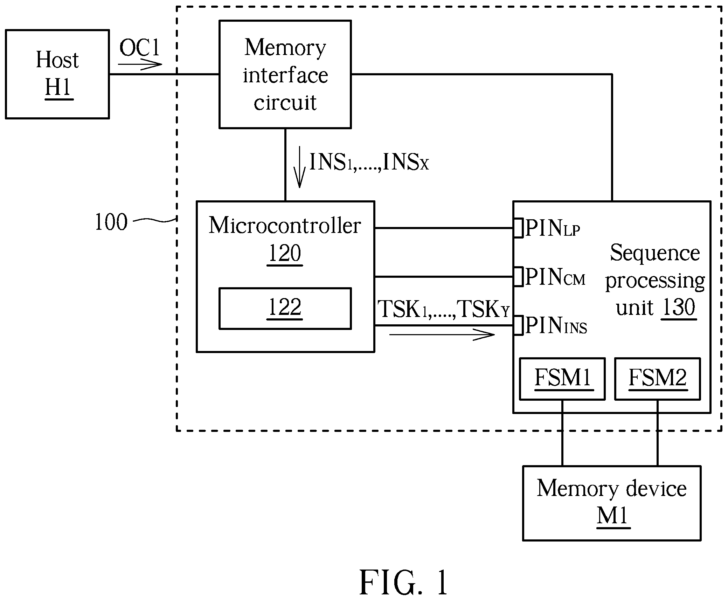

FIG. 1 according to one embodiment of the present invention.

### Detailed Description

FIG. 1 shows a memory control system 100 according to one embodiment of the present invention. The memory control system 100 includes a memory interface circuit 110, a microcontroller 120, and a sequence processing unit 130. In FIG. 1, the memory control system 100 can be used to assist the host H1 to access the memory device M1 so the host H1 can control the memory device M1 with simple operations. In some embodiments, the memory interface circuit 110, the microcontroller 120, and the sequence processing unit 130 can be disposed in the same chip.

The memory interface circuit 110 can receive the memory operation command OC1. In some embodiments, the memory operation command OC1 can be a relatively high level command generated by the host H1, such as the central processing unit of the computer system, for controlling the memory device M1. The memory interface circuit 110 can decode the memory operation command OC1 and generate a plurality of operation instructions INS₁ to INSx to trigger the microcontroller 120 according to the memory operation command OC1, where X is a positive integer.

In some embodiments, the memory interface circuit 110 and the microcontroller 120 may communicate through a standard bus protocol, for example but not limited to system management bus or inter-integrated circuit bus. In this case, the memory interface circuit 110 may generate the operation instructions INS₁ to INSx by reforming the memory operation command OC1 to comply with the bus protocol in use.

The microcontroller 120 is coupled to the memory interface circuit 110. The microcontroller 120 can receive the plurality of operation instructions INS₁ to INSx, and generate a plurality of task instructions TSK₁ to TSK_{Y} according the scheduling algorithm, where Y is a positive integer.

The sequence processing unit 130 is coupled to the microcontroller 120, and includes finite state machines FSM1 and FSM2. The sequence processing unit 130 can receive the task instructions TSK₁ to TSK_{Y}, and control the circuits of a memory device M1 according to the task instructions TSK₁ to TSK_{Y} with the finite state machines FSM1 and FSM2.

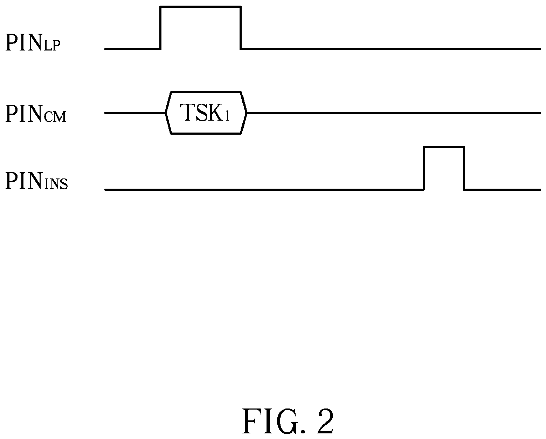

In some embodiments, the microcontroller 120 and the sequence processing unit 130 can communicate through a predetermined protocol. For example, the sequence processing unit 130 can further include a load pin PIN_{LD}, an operation instruction pin PIN_{INS}, and a completion pin PIN_{CM}. FIG. 2 shows the timing diagram of the communication between the micro controller 120 and the sequence processing unit 130.

In FIG. 2, the microcontroller 120 can raise the voltage of the load pin PIN_{LD} to indicate that the coming task instruction TSK₁ is valid. Therefore, the sequence processing unit 130 will receive the task instruction TSK₁ when the voltage of the load pin PIN_{LD} is pulled high by the microcontroller 120.

Furthermore, after the task instruction TSK₁ has been executed, the sequence processing unit 130 can raise the voltage of the completion pin PIN_{CM} to notify the microcontroller 120. However, in some other embodiments, the microcontroller 120 and the sequence processing unit 130 may communicate with a different scheme and/or with different pins according to the system requirement.

The sequence processing unit 130 controls the circuits of the memory device M1, such as the power regulator for providing the required word line voltages and may control the address decoder for selecting the target memory cell, and/or the sense amplifier for sensing the read currents. Furthermore, in some embodiments, the memory device M1 can be a non-volatile memory (NVM) . Since the non-volatile memory may need a high program voltage for the program operation, the sequence processing unit 130 may also control the charge pump for providing the high program voltages.

In addition, in some embodiments, the sequence processing unit 130 may use different finite state machines to handle different types of circuits. For example, the finite state machine FSM1 may be used to control circuits related to the core voltages while the finite state machine FSM2 may be used to control the circuits related to the page buffer. However, in some other embodiments, the sequence processing unit 130 may include more or less finite state machines for controlling the circuits of the memory device 100 according to the system requirement.

Since the sequence processing unit 130 can control the memory device M1 with the finite state machines FSM1 and FSM2, the control operation can be performed in a more straight forward manner without redundant routine operations required by the microcontroller used in prior art. Therefore, the resource utilization ratio and the performance of the sequence processing unit 130 can be improved.

While the sequence processing unit 130 can control the circuits of the memory device 100 directly, the microcontroller 120 can control the schedule of the tasks performed by the sequence processing unit 130. That is, the microcontroller 120 can assign the task instructions TSK₁ to TSK_{Y} with a desired order according to the scheduling algorithm. In some embodiments, the task instructions can be stored as a set with the desired order in an internal storage unit 122 of the microcontroller 120, and the microcontroller 120 can issue the task instructions with the predetermined order corresponding to the operation instruction transmitted from the memory interface circuit 110.

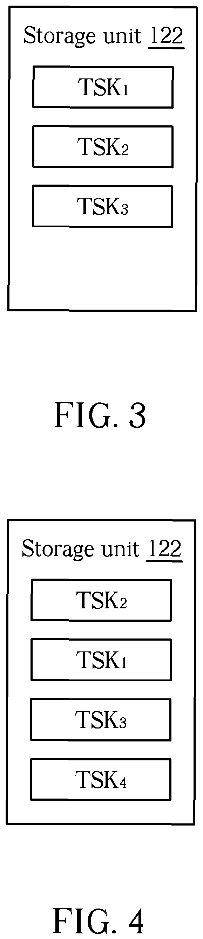

FIG. 3 shows the task instruction set stored in the internal storage unit 122 corresponding to the operation instruction INS₁ according to a scheduling algorithm. In FIG. 3, when the microcontroller 120 receives the operation instruction INS₁, the microcontroller 120 may issue the task instructions TSK₁, TSK₂, and TSK₃ sequentially as indicated by the task instruction set stored in the internal storage unit 122.

For example, the task instruction TSK₁ may imply to sense the read current, and task instructions TSK₂ and TSK₃ may imply to transfer the corresponding data respectively in the page buffer.

In this case, the order of the task instructions to be issued can be easily adjusted by updating the task instruction set stored in the storage unit 122. For example, FIG. 4 shows the task instruction set stored in the internal storage unit 122 corresponding to the operation instruction INS₁ according to the updated scheduling algorithm. In FIG. 4, when the microcontroller 120 receives the operation instruction INS₁, the microcontroller 120 will issue the task instructions TSK₂, TSK₁, TSK₁ and TSK₄ sequentially as indicated by the task instruction set stored in the internal storage unit 122.

That is, the order of the task instructions and the task instructions to be executed can be changed easily by updating the task instruction set stored in the storage unit 122 according to the desired scheduling algorithm. Therefore, the scheduling algorithm can be updated during the development of the memory control system 100, thereby improving the flexibility.

Furthermore, in some embodiments, the sequence processing unit 130 can also be coupled to the memory interface circuit 110 directly. In this case, the memory interface circuit 110 can control the sequence processing unit 130 to access the memory device 100 directly in a test mode of the memory control system 100. This function can be useful during the development stage of the memory control system 100. For example, when the microcontroller 120 is stuck, the memory interface circuit 110 can bypass the microcontroller 120 and control the sequence processing unit 130 directly to locate the issue for debugging. Also, this function can be convenient when testing a new algorithm.

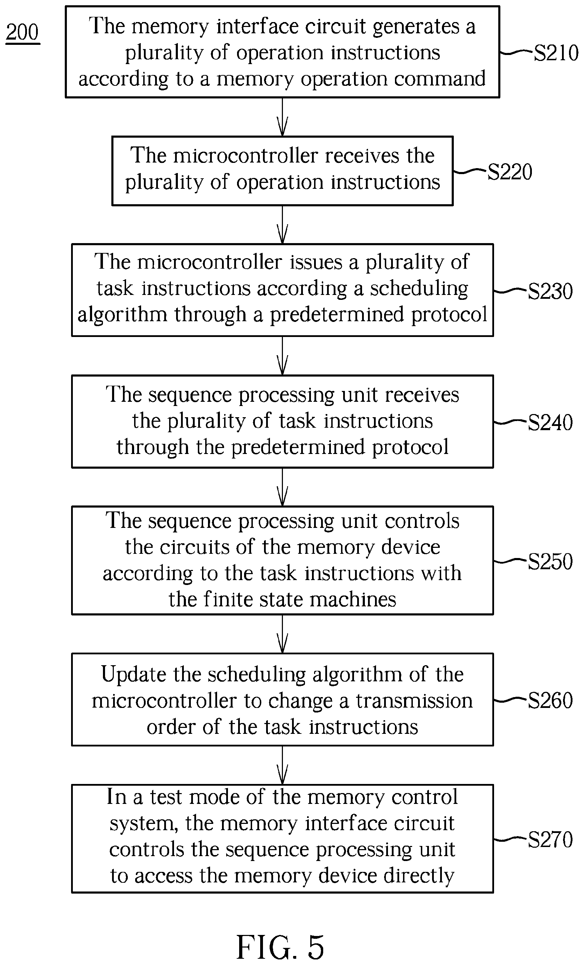

FIG. 5 shows a method 200 for operating the memory control system 100 according to one embodiment of the present invention. The method 200 includes steps S210 to S270.

| | |
|---|---|
| S210: | the memory interface circuit 110 generates a plurality of operation instructions INS₁ to INS_{X} according to a memory operation command OC1; |
| S220: | the microcontroller 120 receives the plurality of operation instructions INS₁ to INS_{X}; |
| S230: | the microcontroller 120 issues a plurality of task instructions TSK₁ to TSK_{Y} according a scheduling algorithm through a predetermined protocol; |
| S240: | the sequence processing unit 130 receives the plurality of task instructions TSK₁ to TSK_{Y} through the predetermined protocol; |
| S250: | the sequence processing unit 130 controls the circuits of the memory device M1 according to the task instructions TSK₁ to TSK_{Y} with the finite state machines FSM1 and FSM2; |
| S260: | update the scheduling algorithm of the microcontroller 120 to change a transmission order of the task instructions TSK₁ to TSK_{Y}; and |
| S270: | in a test mode of the memory control system 100, the memory interface circuit 110 controls the sequence processing unit 120 to access the memory device M1 directly. |

In some embodiments, the memory interface circuit 110 and the microcontroller 120 may communicate through a standard bus protocol while the microcontroller 120 and the sequence processing unit 130 may communicate through a specifically defined communication protocol. For example, in steps S230 and S240, the sequence processing unit 130 may receive the task instructions TSK₁ to TSK_{Y} by following the timing diagram shown in FIG. 2. However, in some other embodiments, the microcontroller 120 and the sequence processing unit 130 may communicate with other protocols according to the system requirement.

In summary, the memory control system and the method for operating the memory control system can control the memory device with the sequence processing unit of the memory control system. Since the sequence processing unit is finite state machine based, the control of the memory device can be simplified with higher utilization ratio and higher performance. Furthermore, since the memory control system also adopts a microcontroller to schedule the tasks, the scheduling algorithm can be updated flexibly by updating the instruction sets stored in the internal storage unit of the microcontroller, thereby improving the efficiency of development.

## Claims

1. A memory control system (100) comprising:
a memory interface circuit (110) configured to receive a memory operation command (OC1) and generate a plurality of operation instructions (INS₁, INS_{X}) according to the memory operation command (OC1);
a microcontroller (120) coupled to the memory interface circuit (110), and configured to receive the plurality of operation instructions (INS₁, INS_{X}) and generate a plurality of task instructions (TSK₁, TSK₂ TSK₃, TSK₄, TSK_{Y}) according a scheduling algorithm through a predetermined protocol; and
a sequence processing unit (130) coupled to the microcontroller (120), comprising at least one finite state machine (FSM1, FSM2), and configured to receive the plurality of task instructions (TSK₁, TSK₂ , TSK₃, TSK₄, TSK_{Y}) through the predetermined protocol, and control a plurality of circuits of a memory device (M1) according to the plurality of task instructions (TSK₁, TSK₂ , TSK₃, TSK₄, TSK_{Y}) with the at least one finite state machine (FSM1, FSM2),
wherein the sequence processing unit (130) is further coupled to the memory interface circuit (110); and
in a test mode of the memory control system (100), the memory interface circuit (110) controls the sequence processing unit (130) to access the memory device (M1) directly,
wherein the microcontroller (120) is further configured to update the scheduling algorithm to change a transmission order of the plurality of task instructions (TSK₁, TSK₂, TSK₃, TSK₄, TSK_{Y}), wherein
the microcontroller comprises a storage unit, the storage unit stores the plurality of task instructions in locations within the storage unit corresponding to the transmission order assigned according to the scheduling algorithm, and wherein receiving the plurality of task instructions through the predetermined protocol includes receiving the plurality of task instructions stored in the storage unit, **characterized in that** the memory interface circuit (110) and the microcontroller (120) communicate through a standard bus protocol, and the plurality of circuits of the memory device (M1) comprises a charge pump and a power regulator.

2. The memory control system (100) of claim 1, wherein:
the sequence processing unit (130) further comprises a load pin (PIN_{LP})and an operation instruction pin (PIN_{INS}); and
the sequence processing unit (130) receives a task instruction (TSK₁, TSK₂, TSK₃, TSK₄, TSK_{Y}) when a voltage of the load pin (PIN_{LP}) is pulled high by the microcontroller (120).

3. The memory control system (100) of claim 2, wherein:
the sequence processing unit (130) further comprises a completion pin (PIN_{CM}); and
when the task instruction (TSK₁, TSK₂ TSK₃, TSK₄, TSK_{Y}) has been performed, the sequence processing unit (130) raises a voltage of the completion pin (PIN_{CM}) to notify the microcontroller (120).

4. The memory control system (100) of claim 1, wherein the memory device (M1) is a non-volatile memory (NVM).

5. The memory control system (100) of claim 1, wherein the memory interface circuit (110), the microcontroller (120), and the sequence processing unit (130) are disposed in a same chip.

6. A method (200) for operating a memory control system (100) according to claim 1, the memory control system (100) comprising a memory interface circuit (110), a microcontroller (120), wherein the microcontroller comprises a storage unit, and a sequence processing unit (130) comprising at least one finite state machine (FSM1, FSM2), the method comprising:
the memory interface circuit (110) generating a plurality of operation instructions (INS₁, INSx) according to a memory operation command (OC1);
the microcontroller (120) receiving the plurality of operation instructions (INS₁, INSx);
the microcontroller (120) issuing a plurality of task instructions (TSK₁, TSK₂ TSK₃, TSK₄, TSK_{Y}) according a scheduling algorithm through a predetermined protocol;
the sequence processing unit (130) receiving the plurality of task instructions (TSK₁, TSK₂ , TSK₃, TSK₄, TSK_{Y}) through the predetermined protocol;
the sequence processing unit (130) controlling a plurality of circuits of a memory device (M1) according to the plurality of task instructions (TSK₁, TSK₂ TSK₃, TSK₄, TSK_{Y}) with the at least one finite state machine (FSM1, FSM2);
updating the scheduling algorithm of the microcontroller (120) to change a transmission order of the plurality of task instructions (TSK₁, TSK₂, TSK₃, TSK₄, TSK_{Y}) ;
in a test mode of the memory control system (100), the memory interface circuit (110) controlling the sequence processing unit (130) to access the memory device (M1) directly; and
the storage unit stores the plurality of task instructions in locations within the storage unit corresponding to the transmission order assigned according to the scheduling algorithm, wherein
receiving the plurality of task instructions through the predetermined protocol includes receiving the plurality of task instructions stored in the storage unit, wherein the memory interface circuit (110) and the microcontroller (120) communicate through a standard bus protocol and wherein the plurality of circuits of the memory device (M1) comprises a charge pump and a power regulator.

7. The method (200) of claim 6, wherein the sequence processing unit (130) further comprises a load pin (PIN_{LP}) and an operation instruction pin (PIN_{INS}), and the method (200) further comprises:
the microcontroller (120) raising a voltage of the load pin (PIN_{LP}); and
the sequence processing unit (130) receiving a task instruction (TSK₁, TSK₂, TSK₃, TSK₄, TSK_{Y}) when the voltage of the load pin (PIN_{LP}) is pulled high.

8. The method (200) of claim 7, wherein the sequence processing unit (130) further comprises a completion pin (PIN_{CM}), and the method (200) further comprises:
when the task instruction (TSK₁, TSK₂, TSK₃, TSK₄, TSK_{Y}) has been performed, the sequence processing unit (130) raising a voltage of the completion pin (PIN_{CM}) to notify the microcontroller (120).

## Patentansprüche

1. Ein Speichersteuersystem (100), das Folgendes umfasst:
eine Speicherschnittstellenschaltung (110), die so konfiguriert ist, dass sie einen Speicherbetriebsbefehl (OC1) empfängt und eine Vielzahl von Betriebsbefehlen (INS₁, INS_{X}) gemäß dem Speicherbetriebsbefehl (OC1) erzeugt;
einen Mikrocontroller (120), der mit der Speicherschnittstellenschaltung (110) gekoppelt und so konfiguriert ist, dass er die Vielzahl von Betriebsbefehlen (INS₁, INS_{X}) empfängt und eine Vielzahl von Aufgabenbefehlen (TSK₁, TSK₂, TSK₃, TSK₄, TSK_{Y}) gemäß einem Planungsalgorithmus über ein vorbestimmtes Protokoll erzeugt; und
eine Sequenzverarbeitungseinheit (130), die mit dem Mikrocontroller (120) gekoppelt ist, die mindestens einen endlichen Automaten (FSM1, FSM2) umfasst und so konfiguriert ist, dass sie die Vielzahl von Aufgabenbefehlen (TSK₁, TSK₂, TSK₃, TSK₄, TSK_{Y}) über das vorbestimmte Protokoll empfängt und eine Mehrzahl von Schaltungen einer Speichervorrichtung (M1) gemäß der Mehrzahl von Aufgabenbefehlen (TSK₁, TSK₂, TSK₃, TSK₄, TSK_{Y}) mit dem mindestens einen endlichen Automaten (FSM1, FSM2) steuert,
wobei die Sequenzverarbeitungseinheit (130) ferner mit der Speicherschnittstellenschaltung (110) gekoppelt ist; und wobei in einem Testmodus des Speichersteuersystems (100) die Speicherschnittstellenschaltung (110) die Sequenzverarbeitungseinheit (130) steuert, um direkt auf die Speichervorrichtung (M1) zuzugreifen,
wobei der Mikrocontroller (120) ferner so konfiguriert ist, dass er den Planungsalgorithmus aktualisiert, um eine Übertragungsreihenfolge der Mehrzahl von Aufgabenbefehlen (TSK₁, TSK₂, TSK₃, TSK₄, TSK_{Y}) zu ändern, wobei
der Mikrocontroller eine Speichereinheit umfasst, wobei die Speichereinheit die Vielzahl von Aufgabenbefehlen an Orten innerhalb der Speichereinheit speichert, die der gemäß dem Planungsalgorithmus zugewiesenen Übertragungsreihenfolge entsprechen, und wobei
das Empfangen der Mehrzahl von Aufgabenbefehlen durch das vorbestimmte Protokoll das Empfangen der Mehrzahl von Aufgabenbefehlen, die in der Speichereinheit gespeichert sind, einschließt, **dadurch gekennzeichnet, dass** die Speicherschnittstellenschaltung (110) und der Mikrocontroller (120) durch ein Standard-Busprotokoll kommunizieren, und die Mehrzahl von Schaltungen der Speichervorrichtung (M1) eine Ladungspumpe und einen Leistungsregler umfasst.

2. Das Speichersteuerungssystem (100) nach Anspruch 1, wobei:
die Sequenzverarbeitungseinheit (130) ferner einen Lade-Pin (PIN_{LP}) und einen Betriebsbefehl-Pin (PIN_{INS}) umfasst; und
die Sequenzverarbeitungseinheit (130) einen Aufgabenbefehl (TSK₁, TSK₂, TSK₃, TSK₄, TSK_{Y}) empfängt, wenn eine Spannung des Lade-Pins (PIN_{LP}) durch den Mikrocontroller (120) hochgefahren wird.

3. Das Speichersteuerungssystem (100) nach Anspruch 2, wobei:
die Sequenzverarbeitungseinheit (130) ferner einen Abschluss-Pin (PIN_{CM}) umfasst; und
wenn der Aufgabenbefehl (TSK₁, TSK₂, TSK₃, TSK₄, TSK_{Y}) ausgeführt worden ist, die Sequenzverarbeitungseinheit (130) eine Spannung des Abschluss-Pins (PIN_{CM}) erhöht, um den Mikrocontroller (120) zu benachrichtigen.

4. Das Speichersteuersystem (100) nach Anspruch 1, wobei die Speichervorrichtung (M1) ein nichtflüchtiger Speicher (NVM) ist.

5. Das Speichersteuersystem (100) nach Anspruch 1, wobei die Speicherschnittstellenschaltung (110), der Mikrocontroller (120) und die Sequenzverarbeitungseinheit (130) in einem gleichen Chip angeordnet sind.

6. Verfahren (200) zum Betreiben eines Speichersteuersystems (100) nach Anspruch 1, wobei das Speichersteuersystem (100) eine Speicherschnittstellenschaltung (110), einen Mikrocontroller (120), wobei der Mikrocontroller eine Speichereinheit umfasst, und eine Sequenzverarbeitungseinheit (130) umfasst, die mindestens einen endlichen Automaten (FSM1, FSM2) umfasst, wobei das Verfahren umfasst:
die Speicherschnittstellenschaltung (110) erzeugt eine Vielzahl von Betriebsbefehlen (INS₁, INS_{X}) gemäß einem Speicherbetriebsbefehl (OC1); der Mikrocontroller (120) empfängt die Vielzahl von Betriebsbefehlen (INS₁, INS_{X});
der Mikrocontroller (120) gibt eine Vielzahl von Aufgabenbefehlen (TSK₁, TSK₂, TSK₃, TSK₄, TSK_{Y}) gemäß einem Planungsalgorithmus über ein vorbestimmtes Protokoll aus;
die Sequenzverarbeitungseinheit (130) empfängt die Vielzahl von Aufgabenbefehlen (TSK₁, TSK₂, TSK₃, TSK₄, TSK_{Y}) über das vorbestimmte Protokoll;
die Sequenzverarbeitungseinheit (130) steuert eine Vielzahl von Schaltungen einer Speichervorrichtung (M1) gemäß der Vielzahl von Aufgabenbefehlen (TSK₁, TSK₂, TSK₃, TSK₄, TSK_{Y}) mit dem mindestens einen endlichen Automaten (FSM1, FSM2);
Aktualisieren des Planungsalgorithmus des Mikrocontrollers (120), um eine Übertragungsreihenfolge der mehreren Aufgabenbefehle (TSK₁, TSK₂, TSK₃, TSK₄, TSK_{Y}) zu ändern;
die Speicherschnittstellenschaltung (110) steuert in einem Testmodus des Speichersteuerungssystems (100) die Sequenzverarbeitungseinheit (130), um direkt auf die Speichervorrichtung (M1) zuzugreifen; und
die Speichereinheit speichert die Mehrzahl von Aufgabenbefehlen an Orten innerhalb der Speichereinheit, die der gemäß dem Planungsalgorithmus zugewiesenen Übertragungsreihenfolge entsprechen, wobei das Empfangen der Mehrzahl von Aufgabenbefehlen über das vorbestimmte Protokoll das Empfangen der Mehrzahl von Aufgabenbefehlen, die in der Speichereinheit gespeichert sind, einschließt, wobei die Speicherschnittstellenschaltung (110) und der Mikrocontroller (120) über ein Standardbusprotokoll kommunizieren und wobei
die Mehrzahl von Schaltungen der Speichervorrichtung (M1) eine Ladungspumpe und einen Leistungsregler umfasst.

7. Verfahren (200) nach Anspruch 6, wobei die Sequenzverarbeitungseinheit (130) ferner einen Lade-Pin (PIN_{LP}) und einen Betriebsbefehl-Pin (PIN_{INS}) umfasst, und das Verfahren (200) ferner umfasst:
der Mikrocontroller (120) erhöht eine Spannung des Lade-Pins (PIN_{LP}); und
die Sequenzverarbeitungseinheit (130) empfängt einen Aufgabenbefehl (TSK₁, TSK₂, TSK₃, TSK₄, TSK_{Y}), wenn die Spannung des Lade-Pins (PIN_{LP}) hochgefahren wird.

8. Verfahren (200) nach Anspruch 7, wobei die Sequenzverarbeitungseinheit (130) ferner einen Abschluss-Pin (PIN_{CM}) umfasst, und das Verfahren (200) ferner umfasst:
wenn der Aufgabenbefehl (TSK₁, TSK₂, TSK₃, TSK₄, TSK_{Y}) ausgeführt worden ist, erhöht die Sequenzverarbeitungseinheit (130) eine Spannung des Abschluss-Pins (PIN_{CM}), um den Mikrocontroller (120) zu benachrichtigen.

## Revendications

1. Système de commande de mémoire (100) comprenant :
un circuit d'interface de mémoire (110) configuré pour recevoir un ordre d'opération de mémoire (OC1) et pour générer une pluralité d'instructions d'opération (INS₁, INS_{X}) conformément à l'ordre d'opération de mémoire (OC1) ;
un microcontrôleur (120) couplé au circuit d'interface de mémoire (110), et configuré pour recevoir la pluralité d'instructions d'opération (INS₁, INS_{X}) et pour générer une pluralité d'instructions de tâche (TSK₁, TSK₂, TSK₃, TSK₄, TSK_{y}) conformément à un algorithme d'ordonnancement via un protocole prédéterminé ; et
une unité de traitement de séquence (130) couplée au microcontrôleur (120), comprenant au moins un automate fini (FSM1, FSM2), et configurée pour recevoir la pluralité d'instructions de tâche (TSK₁, TSK₂, TSK₃, TSK₄, TSK_{y}) via le protocole prédéterminé, et pour commander une pluralité de circuits d'un dispositif de mémoire (M1) conformément à la pluralité d'instructions de tâche (TSK₁, TSK₂, TSK₃, TSK₄, TSK_{y}) avec ledit au moins un automate fini (FSM1, FSM2),
dans lequel l'unité de traitement de séquence (130) est en outre couplée au circuit d'interface de mémoire (110) ; et
dans un mode test du système de commande de mémoire (100), le circuit d'interface de mémoire (110) commande l'unité de traitement de séquence (130) pour accéder directement au dispositif de mémoire (M1),
dans lequel le microcontrôleur (120) est en outre configuré pour mettre à jour l'algorithme d'ordonnancement pour changer un ordre de transmission de la pluralité d'instructions de tâche (TSK₁, TSK₂, TSK₃, TSK₄, TSK_{y}), dans lequel
le microcontrôleur comprend une unité de stockage, l'unité de stockage stocke la pluralité d'instructions de tâche dans des emplacements à l'intérieur de l'unité de stockage en correspondance avec l'ordre de transmission affecté conformément à l'algorithme d'ordonnancement, et dans lequel
la réception de la pluralité d'instructions de tâche via le protocole prédéterminé inclut de recevoir la pluralité d'instructions de tâche stockées dans l'unité de stockage,
**caractérisé en ce que** le circuit d'interface de mémoire (110) et le microcontrôleur (120) communiquent via un protocole de bus standard, et la pluralité de circuits du dispositif de mémoire (M1) comprennent une pompe de charge et un régulateur de puissance.

2. Système de commande de mémoire (100) selon la revendication 1, dans lequel :
l'unité de traitement de séquence (130) comprend en outre une broche de charge (PIN_{LP}) et une broche d'instructions d'opération (PIN_{INS}) ; et
l'unité de traitement de séquence (130) reçoit une instruction de tâche (TSK₁, TSK₂, TSK₃, TSK₄, TSK_{y}) quand une tension de la broche de charge (PIN_{LP}) est tirée vers le haut par le microcontrôleur (120).

3. Système de commande de mémoire (100) selon la revendication 2, dans lequel :
l'unité de traitement de séquence (130) comprend en outre une broche d'achèvement (PIN_{CM}); et
quand l'instruction de tâche (TSK₁, TSK₂, TSK₃, TSK₄, TSK_{y}) a été exécutée, l'unité de traitement de séquence (130) élève une tension de la broche d'achèvement (PIN_{CM}) pour notification au microcontrôleur (120).

4. Système de commande de mémoire (100) selon la revendication 1, dans lequel le dispositif de mémoire (M1) est une mémoire non volatile (NVM).

5. Système de commande de mémoire (100) selon la revendication 1, dans lequel le circuit d'interface de mémoire (110), le microcontrôleur (120), et l'unité de traitement de séquence (130) sont disposés dans une même puce.

6. Procédé (200) de fonctionnement d'un système de commande de mémoire (100) selon la revendication 1, le système de commande de mémoire (100) comprenant un circuit d'interface de mémoire (110), un microcontrôleur (120), dans lequel le microcontrôleur comprend une unité de stockage, et une unité de traitement de séquence (130) comprenant au moins un automate fini (FSM1, FSM2), le procédé comprenant les étapes consistant à :
générer, via le circuit d'interface de mémoire (110), une pluralité d'instructions d'opération (INS₁, INS_{X}) conformément à un ordre d'opération de mémoire (OC1) ;
recevoir, via le microcontrôleur (120), la pluralité d'instructions d'opération (INS₁, INS_{X}) ;
émettre, via le microcontrôleur (120), une pluralité d'instructions de tâche (TSK₁, TSK₂, TSK₃, TSK₄, TSK_{y}) conformément à un algorithme d'ordonnancement via un protocole prédéterminé ;
recevoir, via l'unité de traitement de séquence (130), la pluralité d'instructions de tâche (TSK₁, TSK₂, TSK₃, TSK₄, TSK_{y}) via le protocole prédéterminé ;
commander, via l'unité de traitement de séquence (130), une pluralité de circuits d'un dispositif de mémoire (M1) conformément à la pluralité d'instructions de tâche (TSK₁, TSK₂, TSK₃, TSK₄, TSK_{y}) avec ledit au moins un automate fini (FSM1, FSM2) ;
mettre à jour l'algorithme d'ordonnancement du microcontrôleur (120) pour changer un ordre de transmission de la pluralité d'instructions de tâche (TSK₁, TSK₂, TSK₃, TSK₄, TSK_{y}) ;
dans un mode test du système de commande de mémoire (100), commander, via le circuit d'interface de mémoire (100), l'unité de traitement de séquence (130) pour accéder directement au dispositif de mémoire (M1) ;
et
stocker, via l'unité de stockage, la pluralité d'instructions de tâche dans des emplacements à l'intérieur de l'unité de stockage en correspondance avec l'ordre de transmission affecté conformément à l'algorithme d'ordonnancement, dans lequel
la réception de la pluralité d'instructions de tâche via le protocole prédéterminé inclut de recevoir la pluralité d'instructions de tâche stockées dans l'unité de stockage, dans lequel le circuit d'interface de mémoire (110) et le microcontrôleur (120) communiquent via un protocole de bus standard et dans lequel la pluralité de circuits du dispositif de mémoire (M1) comprennent une pompe de charge et un régulateur de puissance.

7. Procédé (200) selon la revendication 6, dans lequel l'unité de traitement de séquence (130) comprend en outre une broche de charge (PIN_{LP}) et une broche d'instructions d'opération (PIN_{INS}), et le procédé (200) comprend en outre les étapes consistant à :
élever, via le microcontrôleur (120), une tension de la broche de charge (PIN_{LP}) ; et
recevoir, via l'unité de traitement de séquence (130), une instruction de tâche (TSK₁, TSK₂, TSK₃, TSK₄, TSK_{y}) quand la tension de la broche de charge (PIN_{LP}) est tirée vers le haut.

8. Procédé (200) selon la revendication 7, dans lequel l'unité de traitement de séquence (130) comprend en outre une broche d'achèvement (PIN_{CM}), et le procédé (200) comprend en outre l'étape consistant à :
quand l'instruction de tâche (TSK₁, TSK₂, TSK₃, TSK₄, TSK_{y}) a été exécutée, élever, via l'unité de traitement de séquence (130), une tension de la broche d'achèvement (PIN_{CM}) pour notification au microcontrôleur (120).
